# DEMANDE DE BREVET EUROPEEN

(11) **EP 3 656 261 A1**
(43) Date de publication de la demande: **27.05.2020**
(21) Numéro de dépôt: 20151453.6
(22) Date de dépôt: 25.06.2018
(51) Int. Cl.: A47J 36/16, A47J 27/10

(54) **RECEPTACLE INTERNE, ACCESSOIRE DE PREPARATION CULINAIRE ET APPAREIL ELECTROMENAGER DE PREPARATION CULINAIRE COMPORTANT UN TEL RECEPTACLE INTERNE**

(30) Priorité: 03.07.2017 FR 1756273
(62) Demande divisionnaire de: 18179681.4
(71) Demandeur: SEB S.A., 69130 Ecully (FR)
(72) Inventeur: DESHAYES, Jean-Louis, 53700 AVERTON (FR); NESPOUX, Johan, 53640 LE HORPS (FR); FERRON, Jean-Baptiste, 53940 SAINT-BERTHEVIN (FR)
(74) Mandataire: Bourrières, Patrice

(57) **Abrégé**

- L'invention concerne un réceptacle interne (11) pour récipient de travail d'appareil électroménager de préparation culinaire, comprenant une embase prévue pour reposer à l'intérieur du récipient de travail, et une cuve (16) portée par l'embase, la cuve (16) présentant un fond et une paroi latérale, l'embase comportant une paroi circonférentielle (19) entourant un espace libre (40) accessible par une ouverture inférieure.
- Conformément à l'invention, la paroi circonférentielle (19) présente au moins une échancrure inférieure (20), et de préférence plusieurs échancrures inférieures (20).
- L'invention concerne également un accessoire de préparation culinaire comportant un tel réceptacle interne (11) et un appareil électroménager de préparation culinaire comportant un tel réceptacle interne (11).

## Description

La présente invention concerne le domaine technique des appareils électroménagers de préparation culinaire comportant un outil de travail rotatif tournant dans un récipient de travail.

La présente invention concerne plus particulièrement un réceptacle interne prévu pour être disposé dans un tel récipient de travail.

La présente invention concerne également un accessoire de préparation culinaire comportant un tel réceptacle interne et un outil de travail rotatif accessoire prévu pour être disposé dans ledit réceptacle interne.

La présente invention concerne également un appareil électroménager de préparation culinaire comportant un réceptacle interne ou un accessoire de préparation culinaire du type précité.

Il est connu du document EP2340753 de réaliser un réceptacle interne pour récipient de travail d'un appareil électroménager de préparation culinaire, dans lequel le réceptacle interne comprend une embase prévue pour reposer à l'intérieur du récipient de travail, ainsi qu'une cuve portée par l'embase. L'embase forme une couronne reposant sur le fond du récipient de travail. Un inconvénient de cette réalisation est que la couronne délimite un espace confiné entre le récipient de travail et le fond de la cuve, ce qui peut s'avérer gênant si un tel réceptacle interne est utilisé dans un récipient de travail contenant un liquide porté à ébullition, et/ou si un tel réceptacle interne est mis en place dans un récipient de travail contenant du liquide.

Un autre objet de la présente invention est de proposer un réceptacle interne du type précité, qui puisse être utilisé avec un récipient de travail contenant un liquide porté à ébullition, pour réaliser par exemple des préparations au bain-marie.

Un autre objet de la présente invention est de proposer un réceptacle interne du type précité, dont la mise en place dans un récipient de travail contenant du liquide est facilitée.

Ces objets sont atteints également avec un réceptacle interne pour récipient de travail d'appareil électroménager de préparation culinaire, comprenant une embase prévue pour reposer à l'intérieur du récipient de travail, et une cuve portée par l'embase, l'embase formant une paroi circonférentielle, la cuve présentant un fond et une paroi latérale, du fait que la paroi circonférentielle présente au moins une échancrure inférieure, et de préférence plusieurs échancrures inférieures.

Avantageusement encore, la cuve est assemblée avec l'embase. En d'autres termes, la cuve et l'embase sont formées par au moins deux pièces différentes. Si désiré, au moins une pièce intermédiaire peut être utilisée pour assembler la cuve et l'embase. Si désiré, l'embase peut notamment être réalisée en matière plastique.

Avantageusement alors, la cuve est métallique. Cette disposition permet d'améliorer les échanges thermiques avec le contenu de la cuve.

Avantageusement alors, l'embase présente une paroi supérieure s'étendant sous le fond de la cuve. Cette disposition permet de faciliter l'assemblage de la cuve avec l'embase. Cette disposition permet de faciliter la réalisation d'un assemblage robuste.

Avantageusement alors, la paroi supérieure de l'embase présente au moins un passage traversant. Cette disposition permet un contact direct du fond de la cuve avec un liquide présent dans le récipient de travail.

Avantageusement alors, ledit passage traversant débouche à distance du fond de la cuve et en ce que la paroi supérieure de l'embase s'étend au moins partiellement à distance du fond de la cuve. Cette disposition permet de faciliter un contact direct important entre le fond de la cuve et un liquide présent dans le récipient de travail.

Avantageusement encore, la paroi circonférentielle présente une partie supérieure adjacente à la cuve. Cette disposition permet de confiner la partie supérieure de l'espace délimité par la paroi circonférentielle et la cuve, ce qui permet d'augmenter plus rapidement la température du liquide présent sous le fond de la cuve.

Avantageusement encore, la paroi circonférentielle s'étend dans le prolongement de la paroi latérale de la cuve. Cette disposition permet d'augmenter le volume partiellement confiné sous le fond de la cuve, sans augmenter l'encombrement du réceptacle interne.

Avantageusement encore, la cuve comporte une cheminée axiale issue du fond. La cheminée axiale peut notamment recevoir un outil de travail rotatif. Cette disposition permet d'obtenir un réceptacle interne présentant une partie inférieure étanche dépourvue de parties mobiles telles qu'un axe de transmission traversant le fond.

Ces objets sont atteints également avec un accessoire de préparation culinaire pour récipient de travail d'appareil électroménager de préparation culinaire, comportant un réceptacle interne et un outil de travail rotatif accessoire agencé dans le réceptacle interne, du fait que le réceptacle interne est conforme à l'une au moins des caractéristiques précitées.

Avantageusement alors, l'accessoire de préparation culinaire comporte un couvercle d'accessoire prévu pour obturer au moins partiellement la cuve.

Ces objets sont atteints également avec un appareil électroménager de préparation culinaire, comportant un récipient de travail, un organe d'entraînement en rotation agencé dans le récipient de travail, un réceptacle interne disposé dans le récipient de travail, et un outil de travail rotatif accessoire agencé dans le réceptacle interne et entraîné en rotation par l'organe d'entraînement en rotation, le réceptacle interne comprenant une surface d'appui inférieure reposant à l'intérieur du récipient de travail, du fait que le réceptacle interne est conforme à l'une au moins des caractéristiques précitées.

Avantageusement alors, l'appareil électroménager de préparation culinaire comporte des moyens de chauffe pour chauffer le récipient de travail.

Avantageusement alors, le récipient de travail est métallique et les moyens de chauffe sont portés par le récipient de travail. En alternative, le récipient de travail pourrait notamment reposer sur des moyens de chauffe portés par une base motorisée.

Avantageusement encore, le récipient de travail est monté amovible sur une base motorisée et la base motorisée entraîne en rotation l'organe d'entraînement en rotation lorsque le récipient de travail est en place sur la base motorisée.

L'invention sera mieux comprise à l'étude d'un exemple de réalisation, pris à titre nullement limitatif, illustré dans les figures annexées, dans lesquelles :
- la figure 1 est une vue en coupe et en élévation d'un exemple de réalisation d'un appareil électroménager de préparation culinaire comportant une base motorisée et un récipient de travail, dans laquelle la partie supérieure du récipient de travail n'est pas représentée,
- la figure 2 est une vue en coupe et en élévation du récipient de travail illustré sur la figure 1, dans lequel est agencé un accessoire de préparation culinaire comprenant un réceptacle interne selon l'invention,
- la figure 3 est une vue éclatée en perspective en coupe et en élévation de l'accessoire de préparation culinaire illustré sur la figure 2,
- la figure 4 est une vue assemblée en coupe et en élévation de l'accessoire de préparation culinaire illustré sur les figures 2 et 3,
- la figure 5 est une vue en perspective de dessous d'une embase appartenant au réceptacle interne illustré sur les figures 2 à 4,
- la figure 6 est une vue en perspective de dessous d'une cuve appartenant au réceptacle interne illustré sur les figures 2 à 4,
- la figure 7 est une vue en perspective de dessous de l'accessoire de préparation culinaire illustré sur les figures 2 à 4,
- la figure 8 est une vue en perspective de dessus de l'embase illustrée sur la figure 5,
- la figure 9 est une vue en élévation et en coupe du réceptacle interne de l'accessoire de préparation culinaire illustré sur les figures 2 à 4, selon une autre orientation de coupe,
- la figure 10 est une vue en élévation et en coupe du réceptacle interne de l'accessoire de préparation culinaire illustré sur les figures 2 à 4, selon une autre orientation.

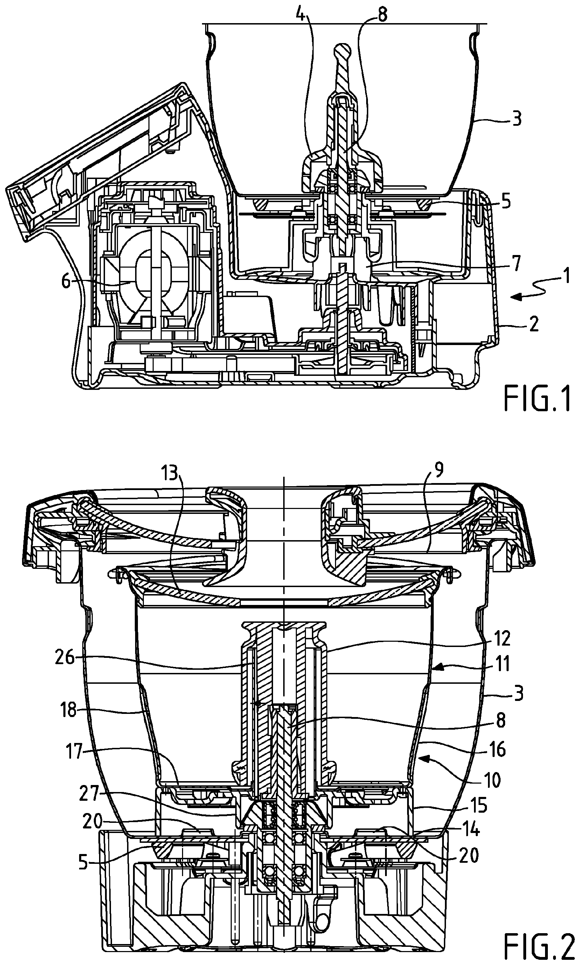

La figure 1 illustre un appareil électroménager de préparation culinaire 1 comportant une base motorisée 2 et un récipient de travail 3. Un outil de travail rotatif principal 4 est agencé dans le récipient de travail 3. La base motorisée 2 comprend un moteur 6 entraînant en rotation un organe entraîneur 7.

Tel que visible sur la figure 2, l'appareil électroménager de préparation culinaire 1 comporte un couvercle principal 9 fermant le récipient de travail 3. Le couvercle principal 9 est par exemple verrouillé par baïonnette sur le récipient de travail 3. Le couvercle principal 9 en position verrouillée est ainsi retenu sur le récipient de travail 3.

Selon une forme de réalisation préférée illustrée sur les figures, le récipient de travail 3 est monté amovible sur la base motorisée 2. Un organe d'entraînement en rotation 8 est agencé dans le récipient de travail 3. L'organe d'entraînement en rotation 8 est entraîné par l'organe entraîneur 7. Ainsi lorsque le récipient de travail 3 est en place sur la base motorisée 2, la base motorisée 2 entraîne en rotation l'organe d'entraînement en rotation 8. L'appareil électroménager de préparation culinaire 1 comporte des moyens de chauffe 5 pour chauffer le récipient de travail 3.

Plus particulièrement dans l'exemple de réalisation illustré sur les figures, les moyens de chauffe 5 sont portés par le récipient de travail 3. Le récipient de travail 3 est métallique. Le récipient de travail 3 est avantageusement réalisé en acier inoxydable.

Tel que représenté sur la figure 2, un réceptacle interne 11 est disposé dans le récipient de travail 3. Dans cette configuration, l'outil de travail rotatif principal 4 n'est pas présent dans le récipient de travail 3. Un outil de travail rotatif accessoire 12 est agencé dans le réceptacle interne 11. Le réceptacle interne 11 et l'outil de travail rotatif accessoire 12 forment un accessoire de préparation culinaire 10 pour le récipient de travail 3 de l'appareil électroménager de préparation culinaire 1. L'outil de travail rotatif accessoire 12 est entraîné en rotation par l'organe d'entraînement en rotation 8. Dans l'exemple de réalisation illustré sur les figures, l'accessoire de préparation culinaire 10 comporte un couvercle d'accessoire 13.

Tel que visible sur la figure 2, le réceptacle interne 11 comprend une surface d'appui inférieure 14 reposant à l'intérieur du récipient de travail 3. Plus particulièrement dans l'exemple de réalisation illustré sur les figures, la surface d'appui inférieure 14 repose sur un fond du récipient de travail 3.

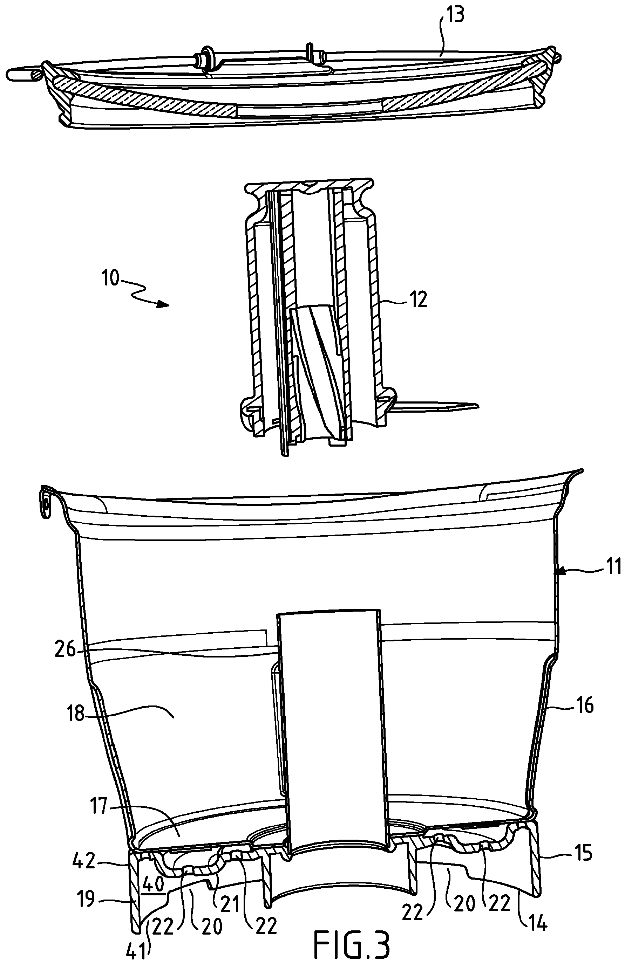

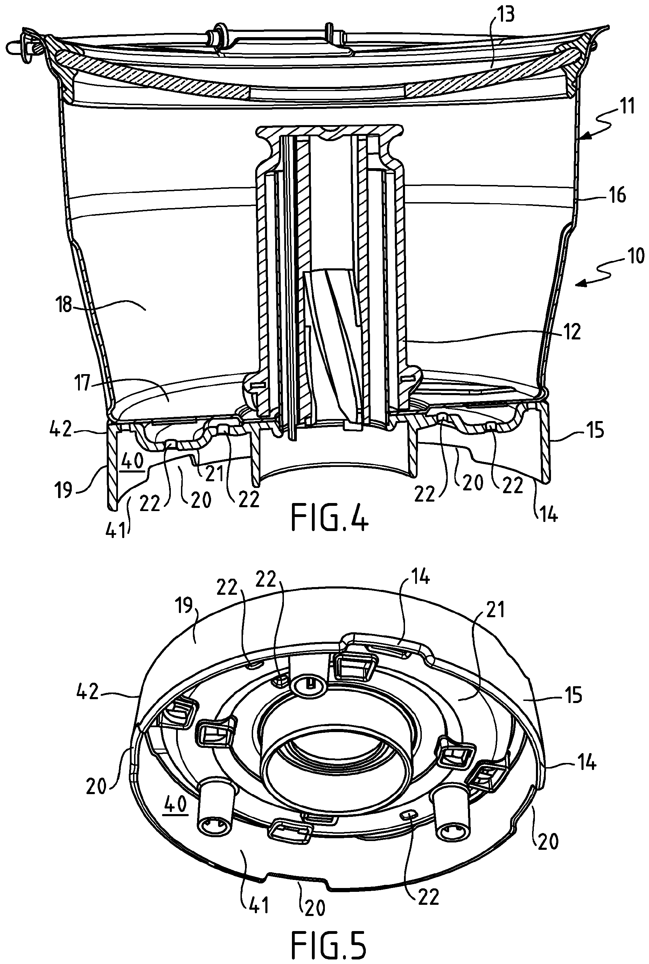

Tel que mieux visible sur les figures 3 et 4, le réceptacle interne 11 comprend une embase 15 et une cuve 16 portée par l'embase 15. La cuve 16 présente un fond 17 et une paroi latérale 18. La cuve 16 comporte une cheminée axiale 26 issue du fond 17.

Tel qu'illustré sur la figure 4, le couvercle d'accessoire 13 est prévu pour obturer au moins partiellement la cuve 16.

Tel que visible sur les figures 3, 4 et 5, l'embase 15 comporte une paroi circonférentielle 19 entourant un espace libre 40 accessible par une ouverture inférieure 41. La paroi circonférentielle 19 présente plusieurs échancrures inférieures 20. Les échancrures inférieures 20 ménagent chacune un passage avec le récipient de travail 3. L'embase 15 présente une paroi supérieure 21. Dans l'exemple de réalisation illustré sur les figures, la paroi circonférentielle 19 est issue de la périphérie de la paroi supérieure 21. La paroi circonférentielle 19 présente une partie supérieure adjacente à la cuve 16. La paroi circonférentielle 19 s'étend dans le prolongement de la paroi latérale 18 de la cuve 16.

Tel que mieux visible sur les figures 3 et 4, la paroi supérieure 21 s'étend sous le fond 17 de la cuve 16. La paroi supérieure 21 s'étend partiellement à distance du fond 17 de la cuve 16. La paroi supérieure 21 présente des passages traversants 22. Les passages traversants 22 débouchent à distance du fond 17 de la cuve 16.

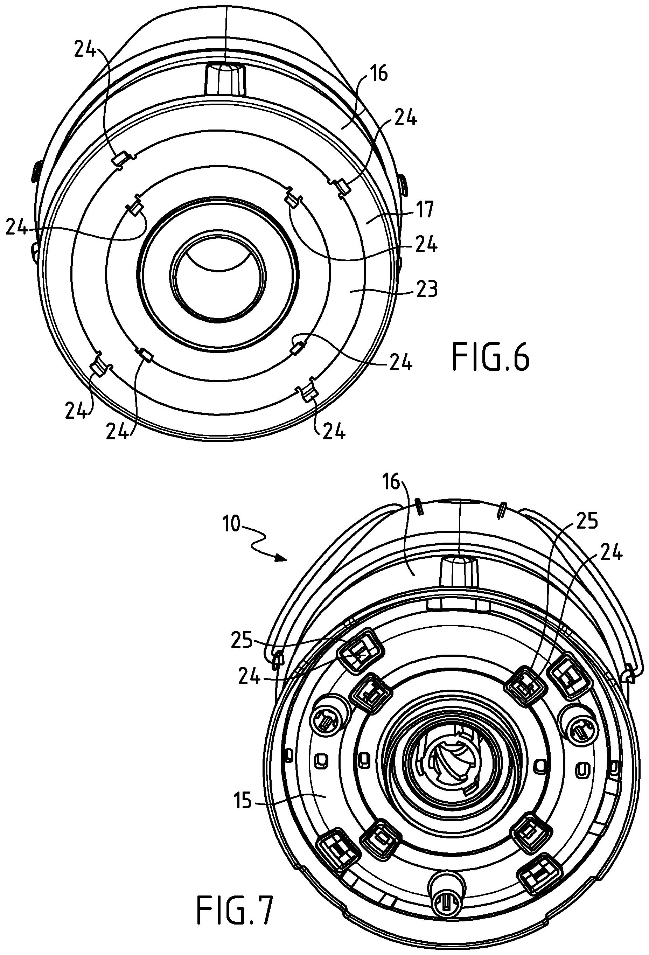

La cuve 16 est assemblée avec l'embase 15. A cet effet une pièce de retenue 23 est agencée sous le fond 17 de la cuve 16, tel que mieux visible sur la figure 6. La pièce de retenue 23 est avantageusement réalisée en acier inoxydable et est par exemple soudée sous la cuve 16. La pièce de retenue 23 présente plusieurs éléments de retenue 24, tels que par exemple des crochets. Les éléments de retenue 24 sont prévus pour être engagés dans des ouvertures 25 de l'embase 15, afin de solidariser la cuve 16 avec l'embase 15, tel que représenté sur la figure 7.

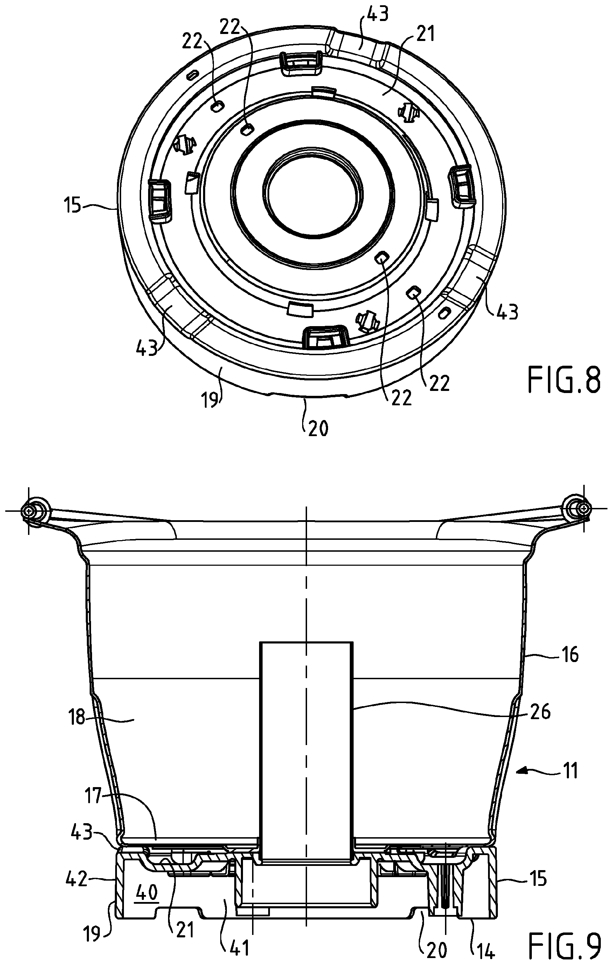

Tel que visible sur la figure 8, la paroi supérieure 21 de l'embase 15 présente plusieurs canaux 43 atteignant la paroi circonférentielle 19 de l'embase 15. Tel que mieux visible sur la figure 9, les canaux 43 débouchent dans la face latérale extérieure 42 du réceptacle interne 11 en dessous la cuve 16. La paroi supérieure 21 de l'embase 15 s'étend sous le fond 17 de la cuve 16.

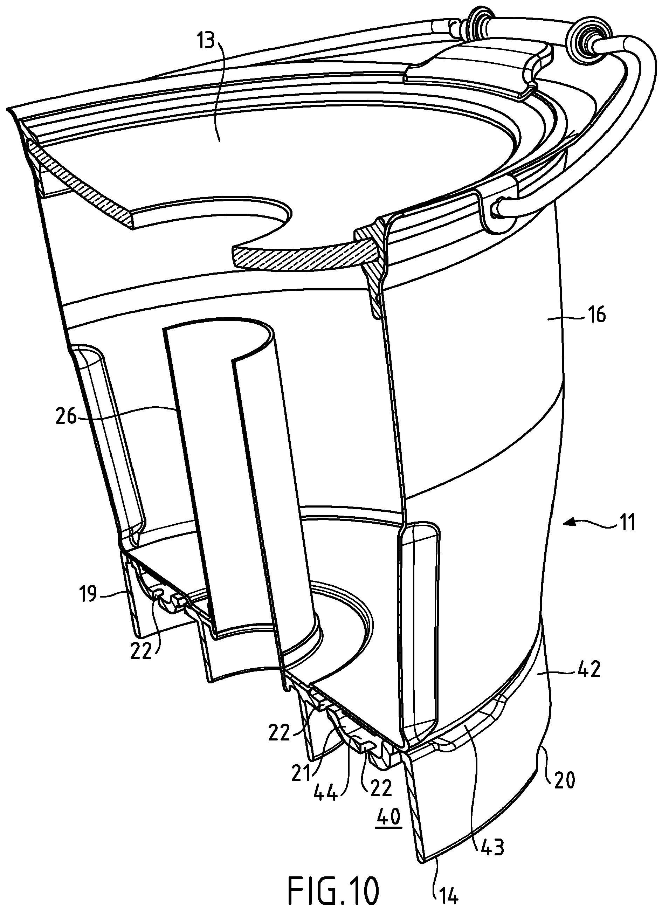

Tel que mieux visible sur la figure 10, la paroi supérieure 21 de l'embase 15 s'étend au moins partiellement à distance du fond 17 de la cuve 16. Les passages traversants 22 débouchent à distance du fond 17 de la cuve 16. L'espace entre la paroi supérieure 21 de l'embase 15 et le fond 17 de la cuve 16 communique avec l'extérieur du réceptacle interne 11 d'une part par les passages traversants 22 et d'autre part par les canaux 43. Ainsi le réceptacle interne 11 présente au moins un passage libre 44 reliant l'espace libre 40 à la face latérale extérieure 42 du réceptacle interne 11.

Plus particulièrement dans l'exemple de réalisation illustré sur les figures, les canaux 43 forment chacun une partie d'un des passages libres 44.

Le fonctionnement de la présente invention est le suivant.

L'utilisateur place le récipient de travail 3 sur la base motorisée 2, puis dispose le réceptacle interne 11 dans le récipient de travail 3. L'organe d'entraînement en rotation 8 s'étend alors à l'intérieur de la cheminée axiale 26. Une nervure annulaire 27 issue de l'embase 15 s'étendant autour de l'organe d'entraînement en rotation 8 permet de centrer le réceptacle interne 11 dans le récipient de travail 3. L'utilisateur dispose ensuite l'outil de travail rotatif accessoire 12 dans le réceptacle interne 11. L'outil de travail rotatif accessoire 12 peut alors être entraîné par l'organe d'entraînement en rotation 8. Le réceptacle interne 11 permet de réaliser dans la cuve 16 une préparation mélangée par l'outil de travail rotatif accessoire 12. Cette préparation peut être chauffée au bain marie en remplissant le récipient de travail 3 avec du liquide, avantageusement avec de l'eau, jusqu'à un niveau de préférence bien inférieur au bord supérieur du réceptacle interne 11.

Si le réceptacle interne 11 est mis en place dans le récipient de travail 3 contenant préalablement du liquide, par exemple avec une hauteur de liquide supérieure à la hauteur de l'embase 15, l'air emprisonné dans l'espace libre peut s'échapper hors de l'embase 15 par les passages libres 44, en traversant successivement les passages traversants 22, puis l'espace entre la paroi supérieure 21 de l'embase 15 et le fond 17 de la cuve 16, puis les canaux 43. Les passages libres 44 ménagés dans une partie supérieure de l'embase 15 permettent l'évacuation de l'air ou de la vapeur présent(e) dans l'espace libre 40.

Les passages libres 44 permettent également de favoriser la circulation de liquide sous le fond 17 de la cuve 16, ce qui permet d'améliorer l'efficacité du chauffage de la cuve 16 lorsque l'embase 15 est immergée dans un liquide chaud ou dans un liquide chauffé.

Les échancrures inférieures 20 permettent également de favoriser la circulation du liquide entre une zone inférieure sous le fond du réceptacle interne 11 et une zone latérale autour du réceptacle interne 11.

Ces dispositions permettent aussi de favoriser la chauffe du liquide sous le réceptacle interne 11, grâce à la paroi circonférentielle 19 qui permet de confiner une partie du liquide sous le fond du réceptacle interne 11, tout en évitant des phénomènes indésirables dus à la surchauffe et/ou à l'ébullition du liquide.

La paroi circonférentielle 19 présentant les échancrures inférieures 20 confère au réceptacle interne 11 une bonne stabilité. La réalisation de l'embase 15 par moulage est simple.

A titre de variante, la paroi circonférentielle 19 peut présenter au moins une échancrure inférieure 20, ou être dépourvue d'échancrure inférieure 20.

A titre de variante, la paroi supérieure 21 de l'embase peut s'étendre au moins partiellement à distance du fond 17 de la cuve 16.

A titre de variante, la paroi supérieure 21 de l'embase 15 peut présenter au moins un passage traversant 22.

A titre de variante, l'embase 15 n'est pas nécessairement assemblée avec la cuve 16. L'embase 15 pourrait notamment être issue de la cuve 15.

A titre de variante, la paroi supérieure 21 de l'embase 15 peut présenter au moins un canal 43 formant une partie dudit au moins un passage libre 44.

La présente invention n'est nullement limitée à l'exemple de réalisation décrit et à ses variantes, mais englobe de nombreuses modifications dans le cadre des revendications.

## Revendications

1. Réceptacle interne (11) pour récipient de travail (3) d'appareil électroménager de préparation culinaire (1), comprenant une embase (15) prévue pour reposer à l'intérieur du récipient de travail (3), et une cuve (16) portée par l'embase (15), la cuve (16) présentant un fond (17) et une paroi latérale (18), l'embase (15) comportant une paroi circonférentielle (19) entourant un espace libre (40) accessible par une ouverture inférieure (41), **caractérisé en ce que** la paroi circonférentielle (19) présente au moins une échancrure inférieure (20), et de préférence plusieurs échancrures inférieures (20).

2. Réceptacle interne (11) selon la revendication 1, **caractérisé en ce que** la cuve (16) est assemblée avec l'embase (15).

3. Réceptacle interne (11) selon l'une des revendications 1 ou 2, **caractérisé en ce que** la cuve (16) est métallique.

4. Réceptacle interne (11) selon l'une des revendications 1 à 3, **caractérisé en ce que** la paroi circonférentielle (19) présente une partie supérieure adjacente à la cuve (16).

5. Réceptacle interne (11) selon l'une des revendications 1 à 4, **caractérisé en ce que** la paroi circonférentielle (19) s'étend dans le prolongement de la paroi latérale (18) de la cuve (16).

6. Réceptacle interne (11) selon l'une des revendications 1 à 5, **caractérisé en ce que** la cuve (16) comporte une cheminée axiale (26) issue du fond (17).

7. Accessoire de préparation culinaire (10) pour récipient de travail (3) d'appareil électroménager de préparation culinaire (1), comportant un réceptacle interne (11) et un outil de travail rotatif accessoire (12) agencé dans le réceptacle interne (11), **caractérisé en ce que** le réceptacle interne (11) est conforme à l'une des revendications 1 à 6.

8. Accessoire de préparation culinaire (10) selon la revendication 7, **caractérisé en ce qu'**il comporte un couvercle d'accessoire (13) prévu pour obturer au moins partiellement la cuve (16).

9. Appareil électroménager de préparation culinaire (1), comportant un récipient de travail (3), un organe d'entraînement en rotation (8) agencé dans le récipient de travail (3), un réceptacle interne (11) disposé dans le récipient de travail (3), et un outil de travail rotatif accessoire (12) agencé dans le réceptacle interne (11) et entraîné en rotation par l'organe d'entraînement en rotation (8), le réceptacle interne (11) comprenant une surface d'appui inférieure (14) reposant à l'intérieur du récipient de travail (3), **caractérisé en ce que** le réceptacle interne (11) est conforme à l'une des revendications 1 à 6.

10. Appareil électroménager de préparation culinaire (1) selon la revendication 9, **caractérisé en ce qu'**il comporte des moyens de chauffe (5) pour chauffer le récipient de travail (3).

11. Appareil électroménager de préparation culinaire (1) selon la revendication 10, **caractérisé en ce que** le récipient de travail (3) est métallique et **en ce que** les moyens de chauffe (5) sont portés par le récipient de travail (3).

12. Appareil électroménager de préparation culinaire (1) selon l'une des revendications 9 à 11, **caractérisé en ce que** le récipient de travail (3) est monté amovible sur une base motorisée (2) et **en ce que** la base motorisée (2) entraîne en rotation l'organe d'entraînement en rotation (8) lorsque le récipient de travail (3) est en place sur la base motorisée (2).
